# EUROPEAN PATENT SPECIFICATION

(11) **EP 2 634 703 B1**
(45) Date of publication and mention of the grant of the patent: **21.02.2018**
(21) Application number: 11835440.6
(22) Date of filing: 26.10.2011
(51) Int. Cl.: G06F 12/14, G06F 21/00, G06F 21/60, G06F 21/70, H04L 29/06, G06Q 20/10, H04W 12/04, G06F 21/62, G06F 21/74

(54) **REMOVABLE STORAGE DEVICE, AND DATA PROCESSING SYSTEM AND METHOD BASED ON THE DEVICE**
WECHSELSPEICHERVORRICHTUNG, SOWIE DATENVERARBEITUNGSSYSTEM UND -VERFAHREN MIT DIESER VORRICHTUNG
DISPOSITIF À MÉMOIRE AMOVIBLE ET SYSTÈME ET PROCÉDÉ DE TRAITEMENT DE DONNÉES BASÉS SUR LE DISPOSITIF

(30) Priority: 28.10.2010 CN 201010523982
(43) Date of publication of application: 04.09.2013
(73) Proprietor: China Unionpay Co., Ltd, Pudong New District, Shanghai 200135 (CN)
(72) Inventor: ZHUANG, Xiao, Shanghai 200135 (CN); LU, Zhijun, Shanghai 200135 (CN); HE, Shuo, Shanghai 200135 (CN); MENG, Hongwen, Shanghai 200135 (CN); OU, Peng, Shanghai 200135 (CN)
(74) Representative: Seemann & Partner Patentanwälte mbB
(86) International application number: PCT/CN2011/001788
(87) International publication number: WO 2012/055166

(56) References cited:
- WO-A1-2010/032207
- CN-A- 101 873 583
- CN-U- 201 549 223
- CN-Y- 201 408 416
- US-A1- 2007 033 136
- US-A1- 2008 189 554
- HENRICH C PÖHLS ET AL: "Smartcard Firewalls Revisited", 1 January 2006 (2006-01-01), SMART CARD RESEARCH AND ADVANCED APPLICATIONS LECTURE NOTES IN COMPUTER SCIENCE;;LNCS, SPRINGER, BERLIN, DE, PAGE(S) 179 - 191, XP019029955, ISBN: 978-3-540-33311-1 * Section 2; figure 1 *

## Description

### Technical Field

The present invention relates to network security technology, and particularly relates to a mobile storage device for data processing in security, a data processing system including the mobile storage device and a data processing method using the data processing system.

### Background Art

WO 2010/032207 A2 discloses an authorization device (transaction authorization device (TAD)) for authorizing operations of a remote server requested from user computers via a data communications network. The TAD comprises a computer interface for connecting the device to a local user computer for communication with the remote server via a data communications network.

Further, US 2008/0189554 A1 discloses a secure portable electronic device for providing secure services when used in conjunction with a host computer having a central processing unit. The secure portable device communicates with the host computer via a host agent program executing on the host computer from the secure portable device. Periodically, the host agent and a corresponding program executing on the secure portable device, cooperate to verify the integrity and authenticity of the host agent program, for example, in conjunction with exchanging a new session key.

E-payment and E-banking are becoming popular in financial sector, but safety has been a major obstacle in its development. In order to deal with this issue, banking industry has a variety of solutions, such as dynamic password, token and key disk or USB disk etc.

Mobile storage device, such as key disk, is one kind of hardware which comprises a physical interface (such as USB interface, SD interface and MMC interface), a microprocessor, memory and chip operating system (COS). User's secret keys and/or digital certificate are stored in a data storage space under protection, which is accessed via dedicated program built in the device. In other words, no one can directly access to the space and the secret keys therein are not exportable. This prevents the possibility of copying the digital certificate or identity information stored therein. In addition, the microprocessor is configured to carry out a variety of algorithms for encryption/decryption and signature, which provide a security mechanism for communication between client and server, for example, authenticating user identity encrypting sensitive data. It shall be noted that in the mobile storage devices based on the existing architecture, the dedicated program inside the device only provides its application program interface (API), which can be called by external applications in a process involved in the secret key or the digital certificate. However, the dedicated program has no association with the external applications in view of application logic.

The prior art cannot substantially prevent hackers from spying on and attacking sensitive data involved in a transaction. Thus, it needs to provide a mechanism to guarantee the security of the transaction.

### Summary of the invention

One object of the present invention is to provide a mobile storage device for data processing in security, which greatly improves the safety of payment services.

In order to solve the object, the mobile storage device for data processing in security comprises:
at least one memory for storing a secret key;
an interface circuit; and
a processing unit for communicating with a remote device via the interface circuit and performing security processing and application processing, the security processing including data encryption and decryption with the secret key,
   wherein the processing unit comprising a microprocessor for performing the security processing and the application processing by executing respective programs,
   wherein the interface circuit simulates a network interface complying with a specific network protocol, enabling the processing unit to communicate with the remote device via a client terminal connected to a network;
   wherein the program for the application processing establishes a direct network connection to the remote device via the interface circuit simulating as the network interface complying with the specific network protocol
   and two or more memories for storing the respective programs.

Preferably, in the above-mentioned mobile storage device, the processing unit comprising hardware circuits for performing the security processing and the application processing respectively.

Preferably, in the above-mentioned mobile storage device, the memory is a flash memory or other electrically erasable memory, the interface circuit is at least one of a USB interface, a SIM card interface, a SD interface, or an MMC interface.

Preferably, in the above-mentioned mobile storage device, the program for the application processing is used for implementing online banking business, and the security processing is performed by calling the program for the security processing via application program interface.

Preferably, in the above-mentioned mobile storage device, the network protocol is a TCP / IP protocol stack.

Another object of the present invention is to provide a data processing system, which greatly improved the security of payment services in network environment.

To solve the above objective, the data processing system comprises:
at least one server connected to a network;
a mobile storage device, comprising:
   at least one memory for storing a secret key;
   an interface circuit; and
   a processing unit for communicating with the servers via the interface circuit and performing security processing and application processing, the security processing includes data encryption and decryption with the secret key, the application processing includes generating messages which contain data encrypted with aid secret key
      wherein the processing unit comprising a microprocessor for performing the security processing and the application processing by executing respective programs,
      wherein the interface circuit simulates a network interface complying with a specific network protocol, enabling the processing unit to communicate with the remote device via a client terminal connected to the network;
      wherein the program for the application processing establishes a direct network connection to the remote device via the interface circuit simulating as the network interface complying with the specific network protocol
   and two or more memories for storing the respective programs.

In the above-mentioned data processing system, the mobile storage device is connected with the client terminal in access to the network via the interface circuit, enabling the mobile storage device to access the network for achieving communication between the processing unit and the server.

In the above-mentioned data processing system, the memory is a flash memory or other electrically erasable memory, the interface circuit is at least one of a USB interface, a SIM card interface, a SD interface, or a MMC interface.

Also another object of the present invention is to provide a method for data processing in security by utilizing the data processing system and by program for the application processing as stated above, which greatly improves the security of payment services in network environment.

To realize the above objective, the method comprises the steps of:
establishing a network connection between the processing unit and the at least one server via the interface circuit, wherein the program for the application processing establishes a direct network connection to the remote device via the interface circuit simulating as the network interface complying with the specific network protocol;
the processing unit interacting with the at least one server to execute a transaction process, wherein the processing unit generates a message concerning the transaction process and containing data encrypted by the secret key;
the processing unit sending the message to the at least one server via the network connection; and
the at least one server decrypting the data contained in the message and performing the data processing,
   wherein the network connection between the mobile storage device and the at least one server is established in such a manner that the mobile storage device is connected to the client terminal connected to the network via the interface circuit simulating as the network interface complying with the specific network protocol, whereby the mobile storage device is connected to the network via the client terminal.

Compared with the prior art, the mobile storage device according to the embodiments of the present invention stores not only confidential information such as secret key and digital certificate but also applications for executing transaction processes, whereby providing security protection for the applications at the same level as the confidential information. In addition, where the mobile storage device has a capability of simulating a network interface, a client terminal, such as a personal computer, previously used for executing the applications now can function as a bridge connector between the mobile storage device and a remote server, and the packeting and unpacketing of the transaction data can be performed inside the mobile storage device. This greatly improves the security performance of the transaction processes.

### Description on drawings

The objectives and advantages of the present invention as described above and elsewhere can be seen more clearly and completely from the following detailed explanations in combination with the figures as attached.
Figure 1 is a schematic diagram showing architecture of the mobile storage device according to one embodiment of the present invention.
Figures 2a and 2b are diagrams respectively showing the physical structure and the logical structure of network connection between the mobile storage device according to another embodiment of the present invention and a remote device.
Figure 3 is a schematic diagram showing architecture for internal operation performed in the mobile storage device according to one embodiment of the present invention.
Figure 4 is a schematic diagram showing the data processing system according to another embodiment of the present invention.
Figure 5 is a flowchart showing the method for achieving data processing in security according to another embodiment of the present invention.

### Embodiments

The embodiments are described below with reference to the figures.

### I. The Mobile Storage Device

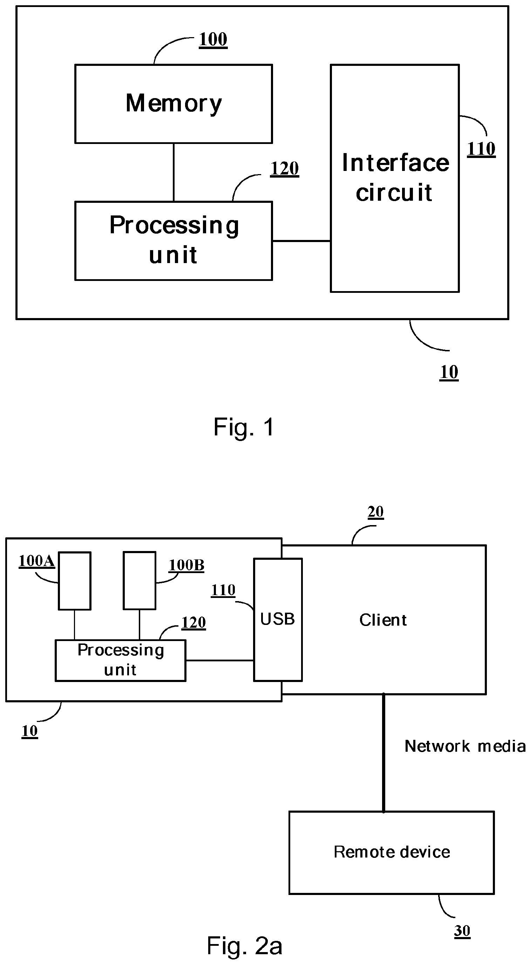

Figure 1 is a schematic diagram showing architecture of the mobile storage device according to one embodiment of the present invention. In the present embodiment, the mobile storage device is in the form of a key disk. However, it is apparent to the skilled in the art that the principle and concept as embodied herein are also applicable to other kinds of the mobile storage devices, for example, including but not limited to a SIM card, a SD card and a MMC card.

As illustrated in Fig. 1, key disk 10 mainly comprises memory 100, interface circuit 110 and processing unit 120.

Memory 100 may be, for example, read-only memory, flash memory, or other forms of non-volatile memory. It should be noted that in Fig. 1, memory 100 is shown as a block, but this does not mean that only one memory can be arranged in the disk. In fact, two or more memories are also available, and preferably, confidential information, such as secret keys and digital certificates, and applications are stored in different memories. Among them, one for the confidential information is not accessible by external devices, and one for the applications is accessible with restriction. For example, the applications can only be called but cannot be rewritten. Alternatively, in the case of one memory, it can be divided into different regions for the confidential information and the applications respectively, and different restriction strategies are applied to these regions.

Interface circuit 110 provides a physical interface for communication between the internal components of the key disk and the external devices. In the present embodiment, for example, interface circuit 110 can be a USB interface, a SD interface, a MMC interface or an RJ45 interface for connecting to a LAN.

Processing unit 120 is the core of key disk 10 and its functions include, for example, security processing and application processing as further described below.

### A. Security Processing

The digital certificate is configured to employ a security mechanism based on asymmetric encryption algorithms such as RSA encryption algorithm, and a certification authority generates a pair of matched keys for a user, i.e. a public key and a private key, among which the former is available from the user's digital certificate and the latter is in secret (e.g., in the present embodiment, it is stored in memory 100 as the confidential information and cannot be accessed by the external devices). In typical applications such as e-payment and e-banking, in order to provide secure communication between a sender and a recipient, the sender encrypts plaintext with the recipient's public key to generate cipher text, and the recipient decrypts the cipher text with its private key. Because only the recipient possesses its private key, the communication can be achieved in security. In order to strengthen the security, a mechanism based on SSL protocol can be used, wherein the public keys and the private keys of the sender and recipient remain unchanged, but dynamic session keys are introduced in each session to encrypt messages to be transmitted. This makes it more difficult to decipher the messages and further ensures the security of data transmission. In addition, the security processing can also be based on a symmetric encryption algorithm, wherein the sender and the recipient use the same secret key.

In the present embodiment, the messages from and to the external devices are decrypted and encrypted in processing unit 120. These encryption and decryption processing are both referred to as security processing in the specification.

The security processing can be performed by means of a dedicated hardware circuit as part of processing unit 120. Alternatively, processing unit 120 comprises a general-purpose microprocessor executing a set of instructions for the security processing. In addition, the instructions can be stored in memory 100.

It shall be noted that although the communication between key disk 10 and the external devices is based on an asymmetric encryption algorithm as described above, a security mechanism based on symmetric encryption algorithms is also applicable.

### B. Application Processing

The existing key disk can provide the security processing including encryption and decryption, and the application processing, e.g., associated with the transaction other than the security processing, are mostly performed on the external devices such as a client terminal and a remote server. For example, when an e-banking or e- payment transaction is initiated, application program residing in the client terminal typically performs the following operations:

### (1) User Authentication

For example, the application program prompts a user to input his username and password through the client terminal and then judges whether he/she is a valid user. The application program will activate the key disk, making it into an enable state only if the authentication is successful.

### (2) Network Connection Establishment

The application program on the client terminal can establish a secure communication channel with the remote server based on SSL protocol by using a digital certificate stored in key disk 10.

### (3) Generating and Sending Message

The application program displays a business logic interface to the user, and based on the function selected by the user from the business logic interface, generates a message containing encrypted data and then send it to the remote device. During this operation, the client terminal may call the security processing performed inside the key disk to encrypt sensitive data, for example, including but not limited to merchant code, sub-merchant/terminal code, order number, transaction amount, transaction currency, the amount of debit, debit currency, the exchange rate of the debit, account information, track information, PIN and card expiration date.

### (4) Receiving and Analyzing Message

The application programs in the client terminal receives a message from the remote server and displays a business logic interface based on the message. Specifically, the application program calls the security processing performed inside key disk 10, for example to decrypt the received message and extract the data required to generate the business logic interface.

In the present embodiment, the application processing is performed by processing unit 120 inside key disk 10. Compared with the prior art where the application processing is performed by the client terminal, because the sensitive data are provided in encrypted form outside key disk 10 and the operations previously performed at the client terminal now is performed inside key disk 10, the security is greatly improved. In addition, no application program is necessary to be installed on the client terminal.

As well, a dedicated hardware circuit may be arranged in processing unit 120 to perform the application processing. Alternatively, processing unit 120 can comprises a general-purpose microprocessor executing application(s) for the application processing. In addition, the application(s) can also be stored in memory 100.

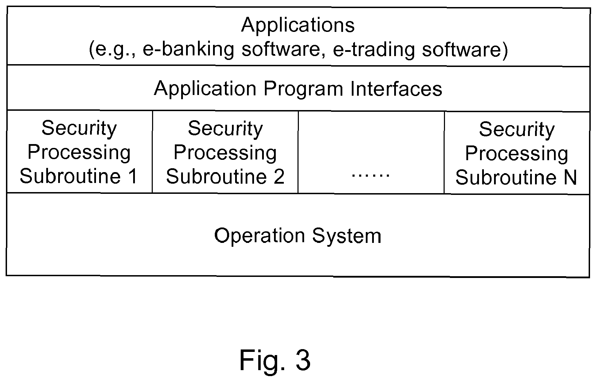

Preferably, as shown in Figure 3, with application program interface (API), the applications such as e-banking software and e-trading software can call subroutines for the security processing to perform business logic.

To access networks based on different physical media, interface circuit 110 in key disk 10 is configured to function as a corresponding physical interface. Alternatively, in order to provide communication between key disk 10 and a remote device, interface circuit 110 can be an interface such as USB interface, SIM card interface, SD interface or MMC interface, and configured to simulate a network interface complying with specific communication protocol by means of a corresponding driver on the client terminal (e.g., personal computer, personal digital aid or mobile phone).

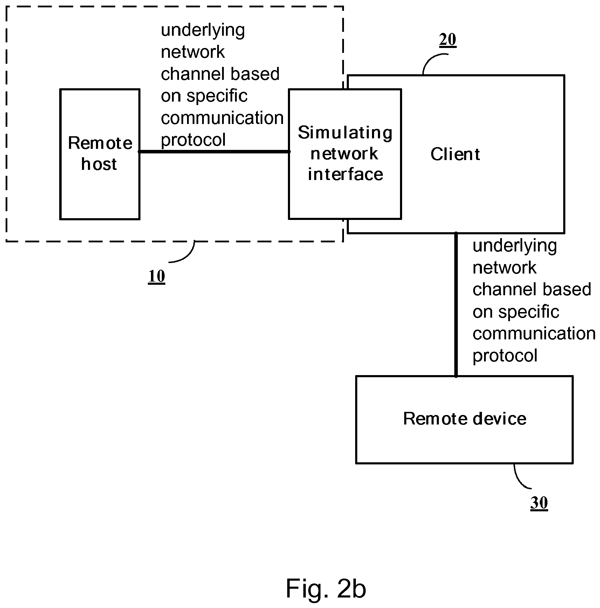

Figures 2a and 2b are diagrams respectively showing its physical structure and logical structure of network connection between the mobile storage device according to another embodiment of the present invention and a remote device. In this embodiment, the key disk is exemplified to equipped with USB interface.

As illustrated in Figure 2a, key disk 10 is connected to client terminal 20 (e.g., a personal computer) through USB interface, and client terminal 20 is connected with remote device 30 (e.g., a remote server) via a network, and key disk 10 comprises interface circuit 110 and processing unit 120. Compared to the arrangement as shown in Figure 1, the key disk herein comprises memory 100A and memory 100B, wherein confidential information such as the secret key is stored in memory 100A, and programs for the security processing and the application processing (e.g. WEB browser) are stored in memory 100B. Also, memory 100B stores network driver(s) to make the key disk to simulate a virtual network device. The programs stored therein are read-only and prohibited from being replaced or modified.

As shown in Figure 2b, upon installing the network driver(s) on client terminal 20, its USB interface may simulate a network interface, and key disk 10 connected to client terminal 20 via this simulated network interface is considered as a remote host by client terminal 20. Therefore, client terminal 20 now functions as a bridge for establishing an underlying network channel between key disk 10 and remote device 30, and processing unit 120 can communicate "directly" with remote device 30 through client terminal 20 complying with a specific communication protocols such as TCP/IP network protocol. On the other hand, memory 100B is configured to be a USB storage disc accessible by an external device, whereby on client terminal 20, the network driver(s) can be directly installed and the programs for application processing can be initiated.

### II. Data Processing System

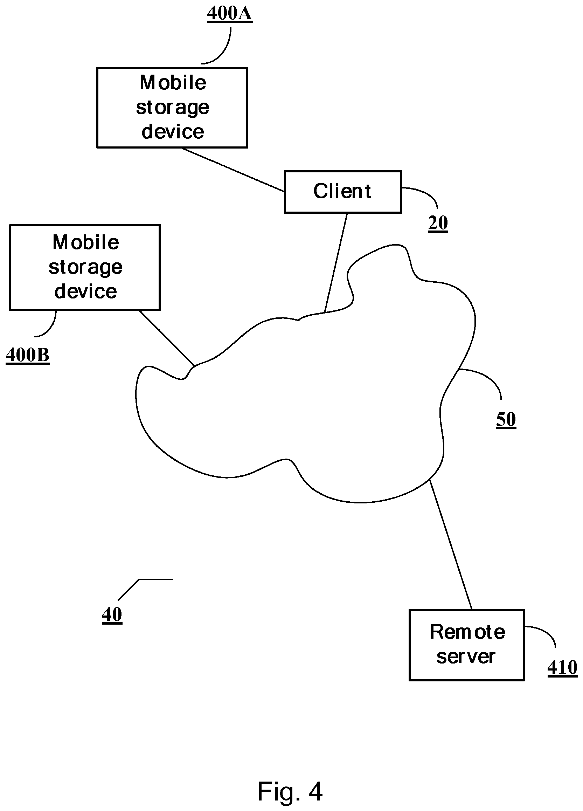

Figure 4 is a schematic diagram showing the data processing system according to another embodiment of the present invention. For illustrative purpose, this embodiment is described in terms of a client/server distributed architecture for e-payment service.

As illustrated in Figure 4, data processing system 40 comprises mobile storage devices 400A and 400B and remote server 410. Mobile storage devices 400A and 400B act as clients responsible for security processing and application processing at users side and can be in the form of the key disk having the architecture as shown in Figure 1. Remote server 410 is configured to perform e-payment handling at bank side.

In Figure 4, mobile storage device 400A, for example, may be a SIM card installed in client terminal 20 (exemplified as a mobile phone herein), which can be wirelessly connected to Internet 50. Likewise, with network driver(s) installed therein, client terminal 20 acts as a bridge for establishing an underlying network channel between mobile storage devices 400A and remote server 410. Thus, mobile storage device 400A can communicate with remote server 410 in accordance with a specific communication protocol such as TCP / IP network protocol.

Preferably, mobile storage device 400A *per se* is not equipped with user input device and/or user output device and is configured to communicate with the user via input and output devices of client terminal 20, e.g., keyboard, touch screen, mouse, and display, etc.

Mobile storage device 400B has sufficient hardware resources, and with its input/output devices and network interface, it can be directly connected to network 50 and thus communicate with remote server 410 without client terminal 20.

### III. Data Security Processing Method

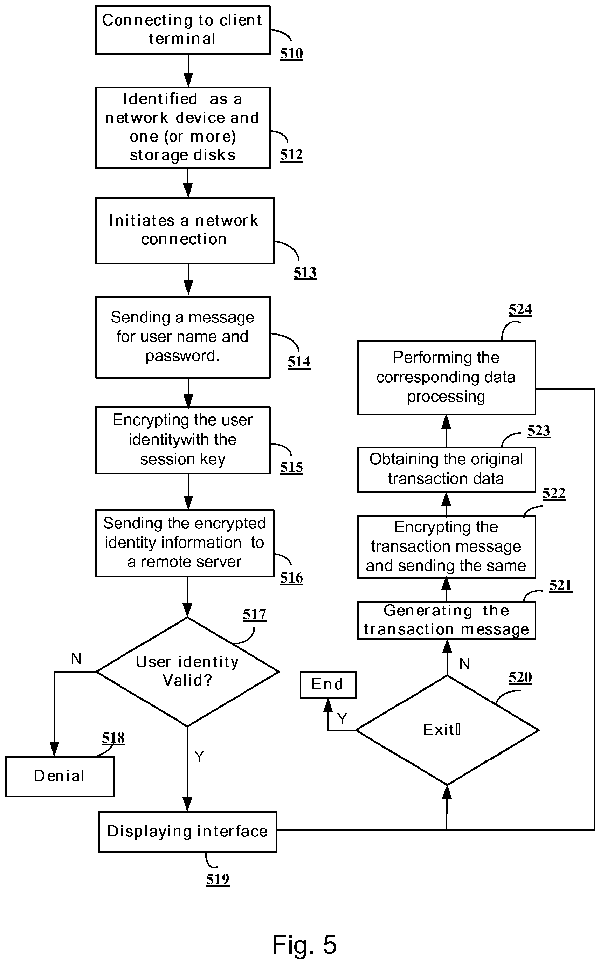

Figure 5 is a flowchart showing the method for achieving data processing in security according to another embodiment of the present invention. The method of the present embodiment is carried out by means of the data processing system as shown in Figure 4.

As illustrated in Figure 5, at step 510, mobile storage device 400 is connected to client terminal 20. With respect to USB key disk, the connection is performed by inserting the key disk into the USB interface of a client terminal. For SIM card, it is connected to the client terminal after being installed into a mobile phone.

Then the flow proceeds to step 511, where mobile storage device 400 is identified by client terminal 20 as a network device and one (or more) storage disks, as described above in conjunction with Figures 2a and 2b.

Then the flow proceeds to step 513, where the processing unit in mobile storage device 400 initiates a network connection to remote server 410 via network 50. For example, a user can establish the network connection by the following way: initiating an application program (such as WEB browser) stored in memory of mobile storage device 400 or in client terminal 20 via input devices such as keyboard, mouse or touch screen, and entering the address of remote server 410 in the Web browser's address bar on the interface of the application program displayed on the output devices such as the display of client terminal 20. Since the client terminal has been connected to network 50, the processing unit can thus establish a network connection with remote server 410 and send a public key (e.g., in the form of a digital certificate) to remote server 410. Optionally, the address of remote server 410 may be built-in the application program in mobile storage device 400, so that the user has no need to manually enter the address of the remote server.

Then the flow proceeds to step 514, where remote server 410 sends a message to mobile storage device 400 for inputting user name and password. The message includes a session key encrypted with the user's public key.

Then the flow proceeds to step 515, where the processing unit of mobile storage devices 400 obtains the session key from the message by using the user's private key, and then uses the session key to encrypt the username and password input by the user through the keyboard, mouse or touch screen on client terminal 20.

Next, at step 516, the processing unit sends the identity information encrypted with the session key to a remote server 410 via the established network connection for authenticating the user's identity.

At step 517, remote server 410 decrypts the username and password with the session key and judges whether the user identity is valid. If it is invalid, the flow proceeds to step 518, where denial information is returned to the user; otherwise, the flow proceeds to step 519, where an interface for data processing is displayed on client terminal 20.

At step 520, by using keyboard, mouse or touch screen, the user selects an Exit option on the interface or selects another option for specific data processing function, e.g., bank account transfer.

If the Exit option is selected, then the flow terminates; otherwise the flow proceeds to step 521. At step 521, the selection associated with the specific data processing function is reported to the processing unit in mobile storage device 400. As a response, the processing unit generates relevant transaction data, for example, including the amount of the transaction, the transaction currency, the amount of the debit, the debit account currency and the debit exchange rates, among which, the sensitive data is first encrypted by the processing unit with the user's private key stored in the memory of mobile storage devices 400, is further encrypted by the processing unit with the public key assigned to remote server 410, and then is encapsulated into a transaction message.

At step 522, the processing unit encrypts the transaction message with the session key, and then transmits it to remote server 410 via the established network connection.

At step 523, remote server 410 first decrypts the transaction message by using the session key, and then decrypts the encrypted data contained in the transaction message with the user's public key, and finally decrypts it with the private key assigned to remote server 410 to obtain the transaction data.

At step 524, remote server 410 performs the corresponding data processing to complete the transaction requested by the user, e.g., bank account transfer, and then the flow returns to step 520.

The present invention can be implemented in various forms therefore, the specific embodiments described above are only illustrative but not restrictive. The scope of the present invention is defined by the appended claims.

## Claims

1. A mobile storage device for data processing in security, comprising
at least one memory configured to store a secret key;
an interface circuit and
a processing unit configured to communicate with a remote device via the interface circuit and to perform security processing and application processing, the security processing including data encryption and decryption with the secret key,
wherein the interface circuit simulates a network interface complying with a specific network protocol, enabling the processing unit to communicate with the remote device via a client terminal connected to a network;
**characterised in that** the processing unit comprises a microprocessor configured to perform the security processing and the application processing by executing respective programs, wherein the program for the application processing establishes a direct network connection to the remote device via the interface circuit simulating as the network interface complying with the specific network protocol
and two or more memories configured to store the respective programs.

2. The mobile storage device according to claim 1, wherein the processing unit comprising hardware circuits configured to perform the security processing and the application processing respectively.

3. The mobile storage device according to claim 1 or 2, wherein the memory is a flash memory or other electrically erasable memory, the interface circuit is at least one of a USB interface, a SIM card interface, a SD interface, or an MMC interface.

4. The mobile storage device according to claim 1, wherein the program for the application processing is used for implementing e-banking business, and the security processing is performed by calling the program for the security processing via application program interface.

5. The mobile storage device according to claim 1, wherein the network protocol is a TCP / IP protocol stack.

6. A data processing system comprising:
at least one server connected to a network;
a mobile storage device, comprising:
at least one memory configured to store a secret key;
an interface circuit; and
a processing unit configured to communicate with the servers via the interface circuit and to perform security processing and application processing, the security processing includes data encryption and decryption with the secret key, the application processing includes generating messages which contain data encrypted with said secret key,
wherein the interface circuit simulates a network interface complying with a specific network protocol, enabling the processing unit to communicate with the remote device via a client terminal connected to the network;
**characterised in that** the processing unit comprises a microprocessor configured to perform the security processing and the application processing by executing respective programs, wherein the program for the application processing establishes a direct network connection to the remote device via the interface circuit simulating as the network interface complying with the specific network protocol
and two or more memories configured to store the respective programs.

7. The data processing system according to claim 6, wherein the memory is a flash memory or other electrically erasable memory, the interface circuit is at least one of a USB interface, a SIM card interface, a SD interface, or a MMC interface.

8. The data processing system according to claim 6, wherein the program for the application processing is used for implementing e-banking business, and the security processing is performed by calling the program for the security processing via application program interface.

9. The data processing system according to claim 6, wherein the network protocol is a TCP / IP protocol stack.

10. A method for data processing in security by utilizing the data processing system according to anyone of claims 6 to 9 and by a program for the application processing, comprising the steps of:
establishing a network connection between the processing unit and the at least one server via the interface circuit, wherein the program for the application processing establishes a direct network connection to the remote device via the interface circuit simulating as the network interface complying with the specific network protocol;
the processing unit interacting with the at least one server to execute a transaction process, wherein the processing unit generates a message concerning the transaction process and containing data encrypted by the secret key;
the processing unit sending the message to the at least one server via the network connection; and
the at least one server decrypting the data contained in the message and performing the data processing,
wherein the network connection between the mobile storage device and the at least one server is established in such a manner that the mobile storage device is connected to the client terminal connected to the network via the interface circuit simulating as the network interface complying with the specific network protocol, whereby the mobile storage device is connected to the network via the client terminal.

## Patentansprüche

1. Mobile Speichereinrichtung zur Datenverarbeitung in Sicherheit, umfassend
mindestens einen Arbeitsspeicher, der ausgestaltet ist, einen geheimen Schlüssel zu speichern;
eine Schnittstellenschaltung und
eine Verarbeitungseinheit, die ausgestaltet ist, mit einer entfernten Einrichtung über die Schnittstellenschaltung zu kommunizieren und Sicherheitsverarbeitung und Anwendungsverarbeitung durchzuführen, wobei die Sicherheitsverarbeitung Datenverschlüsselung und Entschlüsselung mit dem geheimen Schlüssel umfasst,
wobei die Schnittstellenschaltung eine Netzwerkschnittstelle simuliert, die ein bestimmtes Netzwerkprotokoll einhält, wodurch die Verarbeitungseinheit in die Lage versetzt wird, mit der entfernten Einrichtung über ein Client-Endgerät zu kommunizieren, das mit einem Netzwerk verbunden ist;
**dadurch gekennzeichnet, dass** die Verarbeitungseinheit einen Mikroprozessor umfasst, der ausgestaltet ist, die Sicherheitsverarbeitung und die Anwendungsverarbeitung durch Ausführen entsprechender Programme durchzuführen, wobei das Programm für die Anwendungsverarbeitung eine direkte Netzwerkverbindung zu der entfernten Einrichtung über die Schnittstellenschaltung herstellt, die die Netzwerkschnittstelle simuliert, die das bestimmte Netzwerkprotokoll einhält,
und zwei oder mehr Arbeitsspeicher, die ausgestaltet sind, die entsprechenden Programme zu speichern.

2. Mobile Speichereinrichtung nach Anspruch 1, wobei die Verarbeitungseinheit Hardwareschaltungen umfasst, die ausgestaltet sind, jeweils die Sicherheitsverarbeitung und die Anwendungsverarbeitung durchzuführen.

3. Mobile Speichereinrichtung nach Anspruch 1 oder 2, wobei der Arbeitsspeicher ein Flash-Speicher oder ein anderer elektrisch löschbarer Arbeitsspeicher ist, die Schnittstellenschaltung mindestens eine von Folgenden ist: eine USB-Schnittstelle, eine SIM-Karten-Schnittstelle, eine SD-Schnittstelle oder eine MMC-Schnittstelle.

4. Mobile Speichereinrichtung nach Anspruch 1, wobei das Programm für die Anwendungsverarbeitung für das Umsetzen von E-Banking-Geschäften verwendet wird und die Sicherheitsverarbeitung durch Aufrufen des Programms für die Sicherheitsverarbeitung über die Anwendungsprogrammschnittstelle durchgeführt wird.

5. Mobile Speichereinrichtung nach Anspruch 1, wobei das Netzwerkprotokoll ein TCP/IP-Protokollstapel ist.

6. Datenverarbeitungssystem, umfassend:
mindestens einen Server, der mit einem Netzwerk verbunden ist;
eine mobile Speichereinrichtung, umfassend:
mindestens einen Arbeitsspeicher, der ausgestaltet ist, einen geheimen Schlüssel zu speichern;
eine Schnittstellenschaltung; und
eine Verarbeitungseinheit, die ausgestaltet ist, mit den Servern über die Schnittstellenschaltung zu kommunizieren und Sicherheitsverarbeitung und Anwendungsverarbeitung durchzuführen, wobei die Sicherheitsverarbeitung Datenverschlüsselung und Entschlüsselung mit dem geheimen Schlüssel umfasst, die Anwendungsverarbeitung das Erzeugen von Nachrichten umfasst, die Daten enthalten, die mit dem geheimen Schlüssel verschlüsselt sind,
wobei die Schnittstellenschaltung eine Netzwerkschnittstelle simuliert, die ein bestimmtes Netzwerkprotokoll einhält, wodurch die Verarbeitungseinheit in die Lage versetzt wird, mit der entfernten Einrichtung über ein Client-Endgerät zu kommunizieren, das mit dem Netzwerk verbunden ist;
**dadurch gekennzeichnet, dass** die Verarbeitungseinheit einen Mikroprozessor umfasst, der ausgestaltet ist, die Sicherheitsverarbeitung und Anwendungsverarbeitung durch Ausführen entsprechender Programme durchzuführen, wobei das Programm für die Anwendungsverarbeitung eine direkte Netzwerkverbindung zu der entfernten Einrichtung über die Schnittstellenschaltung herstellt, die die Netzwerkschnittstelle simuliert, die das bestimmte Netzwerkprotokoll einhält,
und zwei oder mehr Arbeitsspeicher, die ausgestaltet sind, die entsprechenden Programme zu speichern.

7. Datenverarbeitungssystem nach Anspruch 6, wobei der Arbeitsspeicher ein Flash-Speicher oder ein anderer elektrisch löschbarer Arbeitsspeicher ist, die Schnittstellenschaltung mindestens eine von Folgenden ist: eine USB-Schnittstelle, eine SIM-Karten-Schnittstelle, eine SD-Schnittstelle oder eine MMC-Schnittstelle.

8. Datenverarbeitungssystem nach Anspruch 6, wobei das Programm für die Anwendungsverarbeitung für das Umsetzen von E-Banking-Geschäften verwendet wird und die Sicherheitsverarbeitung durch Aufrufen des Programms für die Sicherheitsverarbeitung über die Anwendungsprogrammschnittstelle durchgeführt wird.

9. Datenverarbeitungssystem nach Anspruch 6, wobei das Netzwerkprotokoll ein TCP/IP-Protokollstapel ist.

10. Verfahren zur Datenverarbeitung in Sicherheit durch Verwenden des Datenverarbeitungssystems nach einem der Ansprüche 6 bis 9 und durch ein Programm für die Anwendungsverarbeitung, das die folgenden Schritte umfasst:
Herstellen einer Netzwerkverbindung zwischen der Verarbeitungseinheit und dem mindestens einen Server über die Schnittstellenschaltung, wobei das Programm für die Anwendungsverarbeitung eine direkte Netzwerkverbindung zu der entfernten Einrichtung über die Schnittstellenschaltung herstellt, die die Netzwerkschnittstelle simuliert, die das bestimmte Netzwerkprotokoll einhält;
die Verarbeitungseinheit steht mit dem mindestens einen Server in Wechselwirkung, um einen Transaktionsprozess auszuführen, wobei die Verarbeitungseinheit eine Nachricht erzeugt, die den Transaktionsprozess betrifft und Daten enthält, die durch den geheimen Schlüssel verschlüsselt sind;
die Verarbeitungseinheit sendet die Nachricht an den mindestens einen Server über die Netzwerkverbindung; und
der mindestens eine Server entschlüsselt die Daten, die in der Nachricht enthalten sind, und führt die Datenverarbeitung durch,
wobei die Netzwerkverbindung zwischen der mobilen Speichereinrichtung und dem mindestens einen Server in einer solchen Weise hergestellt ist, dass die mobile Speichereinrichtung mit dem Client-Endgerät verbunden ist, das mit dem Netzwerk über die Schnittstellenschaltung verbunden ist, die die Netzwerkschnittstelle simuliert, die das bestimmte Netzwerkprotokoll einhält, wodurch die mobile Speichereinrichtung mit dem Netzwerk über das Client-Endgerät verbunden ist.

## Revendications

1. Un dispositif de stockage mobile pour le traitement de données en sécurité, comprenant
au moins une mémoire configurée pour stocker une clé secrète ;
un circuit d'interface et
une unité de traitement configurée pour communiquer avec un dispositif distant via le circuit d'interface et pour effectuer un traitement de sécurité et un traitement d'application, le traitement de sécurité comprenant un cryptage et un décryptage de données avec la clé secrète,
le circuit d'interface simulant une interface réseau conforme à un protocole de réseau spécifique, permettant à l'unité de traitement de communiquer avec le dispositif distant via un terminal client connecté à un réseau ;
**caractérisé en ce que** l'unité de traitement comprend un microprocesseur configuré pour exécuter le traitement de sécurité et le traitement d'application en exécutant des programmes respectifs, le programme pour le traitement d'application établissant une connexion réseau directe avec le dispositif distant via le circuit d'interface simulant l'interface réseau avec le protocole réseau spécifique
et deux ou plusieurs mémoires configurées pour stocker les programmes respectifs.

2. Le dispositif de stockage mobile selon la revendication 1, dans lequel l'unité de traitement comprend des circuits matériels configurés pour mettre en oeuvre le traitement de sécurité et le traitement d'application respectivement.

3. Le dispositif de stockage mobile selon la revendication 1 ou la revendication 2, dans lequel la mémoire est une mémoire flash ou autre mémoire effaçable électriquement, et le circuit d'interface est au moins l'un parmi une interface USB, une interface de carte SIM, une interface SD ou une MMC interface.

4. Le dispositif de stockage mobile selon la revendication 1, dans lequel le programme pour le traitement d'application est utilisé pour mettre en oeuvre une activité de banque électronique, et le traitement de sécurité est mis en oeuvre en appelant le programme pour le traitement de sécurité via une interface de programme d'application.

5. Le dispositif de stockage mobile selon la revendication 1, dans lequel le protocole de réseau est une pile de protocole TCP / IP.

6. Un système de traitement de données comprenant :
au moins un serveur connecté à un réseau ;
un dispositif de stockage mobile, comprenant :
au moins une mémoire configurée pour stocker une clé secrète ;
un circuit d'interface ; et
une unité de traitement configurée pour communiquer avec les serveurs via le circuit d'interface et pour mettre en oeuvre une traitement de sécurité et un traitement d'application, le traitement de sécurité incluant un cryptage et un décryptage des données avec la clé secrète,
le circuit d'interface simulant une interface réseau conforme à un protocole de réseau spécifique, permettant à l'unité de traitement de communiquer avec le dispositif distant via un terminal client connecté au réseau ;
**caractérisé en ce que** l'unité de traitement comprend un microprocesseur configuré pour mettre en oeuvre le traitement de sécurité et le traitement d'application en exécutant des programmes respectifs, le programme pour le traitement d'application établissant une connexion réseau directe avec le dispositif distant via le circuit d'interface simulant l'interface réseau avec le protocole réseau spécifique
et deux ou plusieurs mémoires configurées pour stocker les programmes respectifs.

7. Le système de traitement de données selon la revendication 6, dans lequel la mémoire est une mémoire flash ou une autre mémoire effaçable électriquement, et le circuit d'interface est au moins l'une parmi une interface USB, une interface de carte SIM, une interface SD ou une interface MMC.

8. Le système de traitement de données selon la revendication 6, dans lequel le programme de traitement d'application est utilisé pour mettre en oeuvre une activité de banque électronique, et le traitement de sécurité est mis en oeuvre en appelant le programme pour le traitement de sécurité via une interface de programme d'application.

9. Le système de traitement de données selon la revendication 6, dans lequel le protocole de réseau est une pile de protocole TCP / IP.

10. Un procédé pour le traitement de données en sécurité utilisant le système de traitement de données selon l'une quelconque des revendications 6 à 9 et par un programme pour le traitement d'application, comprenant les étapes consistant à :
établir une connexion réseau entre l'unité de traitement et ledit au moins un serveur via le circuit d'interface, le programme de traitement d'application établissant une connexion réseau directe avec le dispositif distant via le circuit d'interface simulant l'interface réseau conforme au protocole réseau spécifique ;
l'unité de traitement interagissant avec ledit au moins un serveur pour mettre en oeuvre un processus de transaction, l'unité de traitement générant un message concernant le processus de transaction et contenant des données cryptées par la clé secrète ;
l'unité de traitement envoyant le message audit au moins un serveur via la connexion réseau ; et
ledit au moins un serveur décryptant les données contenues dans le message et effectuant le traitement de données,
la connexion réseau entre le dispositif de stockage mobile et ledit au moins un serveur étant établie de telle sorte que le dispositif de stockage mobile est connecté au terminal client connecté au réseau via le circuit d'interface simulant interface réseau se conformant au protocole de réseau spécifique, le dispositif de stockage mobile étant ainsi connecté au réseau via le terminal client.
